# FASCICULE DE BREVET EUROPEEN

(11) **EP 2 396 526 B1**
(45) Date de publication et mention de la délivrance du brevet: **02.01.2013**
(21) Numéro de dépôt: 10706305.9
(22) Date de dépôt: 15.01.2010
(51) Int. Cl.: F02C 7/14, F02C 7/236, F02C 7/275

(54) **MOTEUR AERONAUTIQUE AVEC REFROIDISSEMENT D'UN DISPOSITIF ELECTRIQUE DE DEMARRAGE**
FLUGZEUGTRIEBWERK MIT KÜHLUNG FÜR EINE ELEKTRISCHE STARTVORRICHTUNG
AIRCRAFT ENGINE WITH COOLING FOR AN ELECTRIC STARTING DEVICE

(30) Priorité: 16.02.2009 FR 0950976
(43) Date de publication de la demande: 21.12.2011
(73) Titulaire: SNECMA, 75015 Paris (FR)
(72) Inventeur: AUROUSSEAU, Christian, F-77950 Rubelles (FR)
(74) Mandataire: Joly, Jean-Jacques
(86) Numéro de dépôt international: PCT/FR2010/050060
(87) Numéro de publication internationale: WO 2010/092267

(56) Documents cités:
- EP-A1- 1 953 899
- FR-A- 1 112 758
- US-A- 3 733 816
- US-A- 4 104 873

## Description

### Arrière-plan de l'invention

L'invention concerne le refroidissement de dispositifs électriques de démarrage de moteurs aéronautiques.

Un domaine particulier d'application de l'invention est celui des moteurs aéronautiques à turbine à gaz, notamment les turbo-réacteurs.

Le démarrage de moteur aéronautique est classiquement assuré par une machine électrique entraînant un arbre du moteur. La machine électrique peut être un moteur électrique ou une machine formant démarreur/générateur ou S/G ("Starter/Generator") fonctionnant en mode moteur au démarrage et en mode génératrice synchrone ensuite.

Il est nécessaire, au démarrage, d'évacuer les calories produites par le dispositif électrique de démarrage, à savoir par la machine électrique elle-même et de préférence aussi par le circuit électronique de puissance utilisé pour commander la machine électrique, comme indiqué par exemple dans le document EP 1 953 899.

Dans un moteur aéronautique, le carburant est classiquement utilisé comme fluide de refroidissement, soit directement, soit par échange thermique avec un fluide caloporteur, par exemple de l'huile.

Le carburant est pompé dans un réservoir et amené à un circuit de carburant du moteur qui comprend une pompe haute pression. Celle-ci délivre du carburant sous haute pression à un circuit principal d'alimentation de la chambre de combustion du moteur. La pompe haute pression est typiquement une pompe à engrenages entraînée à partir d'un arbre du moteur par l'intermédiaire d'une boîte mécanique de transmission ou boîte de relais d'accessoires, ou AGB ("Accessory Gear Box").

Il a été proposé d'assurer le refroidissement d'un dispositif électrique de démarrage par du carburant prélevé en sortie de la pompe haute pression du circuit de pompage du moteur. Pour assurer un débit suffisant de carburant de refroidissement au bas régime de démarrage, il est nécessaire de conférer à la pompe haute pression une cylindrée importante. Une telle cylindrée est alors largement surdimensionnée pour fournir le débit requis par le circuit d'alimentation principal lors du fonctionnement du moteur en régime nominal, ce qui impose de dériver une part importante du carburant fourni par la pompe haute pression afin de le retourner vers la basse pression. L'utilisation de pompes supplémentaires entraînées mécaniquement par le moteur pour alimenter le dispositif de refroidissement du dispositif électrique de démarrage pourrait être envisagée. Mais une telle solution se traduit par un accroissement de masse, par la nécessité d'une liaison mécanique supplémentaire avec l'AGB et pose problème à fort régime en dérivant un débit de carburant alors trop important.

Il a été proposé dans le document US 3 733 816 de refroidir un calculateur électronique d'un moteur à turbine à gaz au moyen de carburant fourni par une pompe située en amont de la pompe de carburant haute pression, en série avec cette dernière, les deux pompes étant montées sur une arbre d'entraînement commun couplé au moteur.

### Objet et résumé de l'invention

L'invention a pour but de proposer une solution au problème de refroidissement du dispositif électrique de démarrage ne présentant pas de tels inconvénients.

Ce but est atteint grâce à un moteur aéronautique comprenant un dispositif de pompage de carburant comportant une pompe haute pression ayant une entrée reliée à une conduite de carburant basse pression et une sortie reliée à un circuit principal d'alimentation en carburant haute pression, un dispositif électrique de démarrage du moteur et un dispositif de refroidissement du dispositif électrique de démarrage relié au dispositif de pompage pour assurer le refroidissement par circulation de carburant, moteur dans lequel le dispositif de refroidissement est alimenté en carburant par une pompe entraînée par un moteur électrique indépendamment de la pompe haute pression et ayant une entrée reliée au dispositif de pompage, en amont de la pompe haute-pression.

L'utilisation d'une telle pompe électrique permet d'assurer un débit suffisant de carburant de refroidissement à bas régime sans surdimensionnement de la cylindrée de la pompe haute pression et se traduit par un encombrement moindre et une mise en oeuvre moins complexe que l'ajout d'une pompe entraînée mécaniquement par le moteur.

Avantageusement, le dispositif de pompage comprend une pompe basse pression entraînée à partir d'un arbre du moteur et ayant une sortie reliée à l'entrée de la pompe haute pression, et la pompe électrique alimentant le dispositif de refroidissement a son entrée reliée au dispositif de pompage entre la sortie de la pompe basse pression et l'entrée de la pompe haute pression.

Ainsi, après démarrage, lorsque le régime du moteur augmente, la pompe électrique peut être désactivée, la pompe basse pression étant alors entraînée à une vitesse suffisante pour alimenter le dispositif de refroidissement de façon efficace, le refroidissement pouvant être requis de façon permanente lorsque le dispositif électrique de démarrage est de type S/G.

Avantageusement encore, la pompe électrique alimentant le dispositif de refroidissement a une sortie reliée au circuit principal d'alimentation en carburant haute pression.

Ainsi, lors de la phase de démarrage, la pompe électrique peut contribuer à fournir un débit de carburant suffisant au circuit principal d'alimentation en carburant. On peut alors utiliser une pompe haute pression du type à engrenages, mais avec une cylindrée plus faible, ou une pompe haute pression de type centrifuge, qui a une moindre masse et une meilleure fiabilité qu'une pompe à engrenages, bien qu'elle délivre un plus faible débit de carburant au bas régime de démarrage.

Selon un mode particulier de réalisation, le dispositif de refroidissement comprend un premier circuit de circulation de fluide caloporteur relié au dispositif électrique de démarrage, un deuxième circuit de circulation de carburant relié à la pompe électrique alimentant le dispositif de refroidissement et un échangeur de chaleur traversé par le premier circuit et le deuxième circuit.

Le dispositif de refroidissement peut être agencé pour refroidir un démarreur électrique du dispositif électrique de démarrage et un circuit électronique de commande de puissance du démarreur électrique.

### Brève description des dessins

L'invention sera mieux comprise à la lecture de la description faite ci-après, à titre indicatif mais non limitatif, en référence au dessin annexé sur lequel
- la figure 1 illustre très schématiquement un moteur aéronautique à turbine à gaz ; et
- la figure 2 illustre un mode de réalisation de l'invention.

### Description détaillée de modes de réalisation

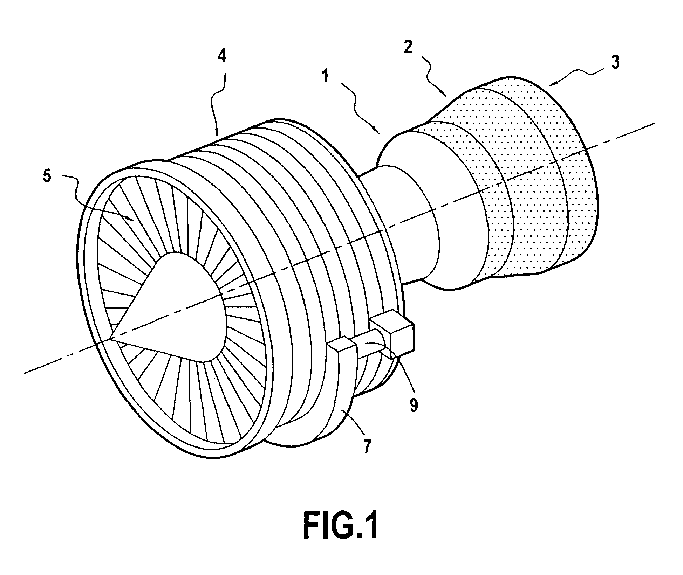

Un domaine d'application de l'invention est celui des moteurs d'avions à turbine à gaz, tel que celui représenté très schématiquement sur la figure 1, l'invention étant toutefois applicable à d'autres moteurs aéronautiques, notamment des turbines d'hélicoptères, ainsi qu'à des moteurs terrestres et navals.

Le moteur de la figure 1 comprend une chambre de combustion 1, les gaz de combustion issus de celle-ci entraînant une turbine haute pression 2 et une turbine basse pression 3. La turbine 2 est couplée par un arbre à un compresseur haute pression alimentant la chambre de combustion en air sous pression tandis que la turbine basse pression est couplée par un autre arbre à une soufflante 5 en entrée du moteur.

Une boîte de transmission ou boîte de relais d'accessoires AGB 7 est reliée par une prise de puissance mécanique 9 à un arbre de turbine et comprend un ensemble de pignons pour couplage mécanique avec un certain nombre d'accessoires.

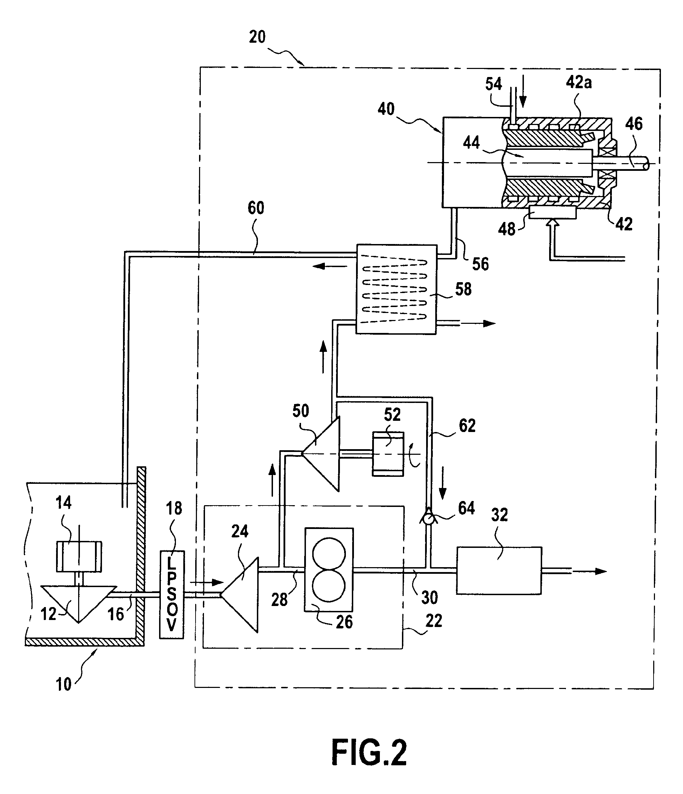

La figure 2 est un schéma simplifié montrant notamment une partie de moteur selon un mode de réalisation de l'invention.

La référence 10 désigne un réservoir de carburant avion avec une pompe de carburant 12 entraînée par un moteur électrique 14 et alimentant une conduite 16 qui achemine du carburant au moteur 20. Une vanne de coupure basse-pression 18 ou LPSOV ("Low Pressure Shut-Off Valve") est interposée sur la conduite 16 en amont du moteur 20.

Le moteur 20 comprend un dispositif de pompage 22 fournissant du carburant à un circuit principal d'alimentation de la chambre de combustion du moteur en carburant haute pression.

A cet effet, le dispositif de pompage 22 comprend une pompe de carburant basse pression 24 dont l'entrée est reliée à la conduite 16 et dont la sortie est reliée à l'entrée d'une pompe de carburant haute pression 26 par une conduite 28. La sortie de la pompe haute pression 26 est reliée à une conduite 30 du circuit principal d'alimentation. Un dispositif de dosage 32 reçoit le débit de carburant fourni par la pompe haute pression afin d'alimenter la chambre de combustion (non représentée) du moteur par un débit régulé de carburant haute pression.

La pompe basse pression 24 est par exemple une pompe centrifuge entraînée mécaniquement par l'intermédiaire de l'AGB. La pompe haute pression 26 est ici une pompe à engrenages également entraînée mécaniquement par l'intermédiaire de l'AGB.

Le moteur 20 comprend un dispositif électrique de démarrage 40, par exemple de type S/G. Le dispositif 40 est logé dans un carter 42. Il comporte une machine électrique 44 ayant un arbre 46 qui fait saillie hors du carter 42 pour couplage mécanique avec l'AGB. En régime de démarrage, la machine électrique fonctionne en mode moteur pour entraîner un arbre de turbine par l'intermédiaire de l'AGB tandis qu'après démarrage, lorsque l'arbre de turbine a atteint une vitesse suffisante, le fonctionnement de la machine électrique est commuté en mode génératrice. Un boîtier 48 renferme l'électronique de puissance pour la commande de la machine électrique 44. Le boîtier est relié électriquement à un circuit de régulation électronique du moteur (non représenté). Le boîtier 48 peut être fixé au carter 42 comme illustré, ou être indépendant de celui-ci.

Conformément à l'invention, le refroidissement du dispositif électrique de démarrage 40 est assuré par du carburant prélevé dans le dispositif de pompage par une pompe 50 entraînée par un moteur électrique 52 lui-même commandé par le circuit de régulation électronique du moteur, l'entraînement de la pompe 50 étant ainsi indépendant de celui de la pompe haute pression 26.

Dans l'exemple illustré, le refroidissement est assuré par échange thermique avec un fluide caloporteur prélevant des calories dans le dispositif de démarrage 40.

Des canaux de circulation de fluide caloporteur 42a sont formés dans les parois du carter 42 et à proximité du boîtier 48. Le fluide caloporteur est par exemple de l'huile utilisée également pour lubrification de divers organes dont l'AGB. Le circuit d'huile avec pompe à huile (non représentée) comprend une conduite 54 qui amène l'huile aux canaux 42a et une conduite 56 qui récupère l'huile ayant circulé dans les canaux 42a et, le cas échéant, ayant aussi été utilisée pour lubrification de paliers supportant l'arbre 46 dans le boîtier 42.

L'échange thermique entre le carburant et l'huile est réalisé au sein d'un échangeur 58. L'échangeur 58 comprend un circuit interne d'huile qui reçoit l'huile provenant du dispositif de démarrage 40 par la conduite 56 et qui restitue l'huile refroidie au circuit d'huile, et un circuit interne de carburant faisant partie d'un circuit de carburant 60 qui a une entrée reliée à la sortie de la pompe 50 et une sortie reliée au réservoir 10.

Dans l'exemple illustré, l'entrée de la pompe 50 est reliée à la conduite 28, c'est-à-dire entre la sortie de la pompe basse pression 24 et l'entrée de la pompe haute pression 26. Ainsi, après démarrage, la pompe électrique 50 peut être arrêtée, la vitesse de l'arbre de turbine entraînant la pompe basse pression 24 devenant suffisante pour fournir le débit de carburant de refroidissement requis pour refroidir efficacement le dispositif de démarrage après commutation de la machine 44 en mode génératrice. L'arrêt de la pompe 50 est commandé par désactivation du moteur électrique 52 sous la commande de l'unité de régulation électronique du moteur lorsque la vitesse de l'arbre de turbine dépasse une valeur minimale donnée.

Dans le cas où le dispositif de pompage comprend seulement une pompe haute pression alimentée directement par la pompe de carburant du réservoir 10, la pompe électrique 50 est reliée à la conduite alimentant la pompe haute pression.

Comme montré sur la figure 2, la sortie de la pompe électrique 50 peut être reliée également par une conduite 62 à la conduite 30 du circuit principal d'alimentation en carburant sous pression, en amont du dispositif de dosage 32. Ainsi, pendant la phase de démarrage, la pompe 50 peut contribuer à la fourniture d'un débit suffisant de carburant à la chambre de combustion. Cette exigence de fourniture de débit de carburant suffisant pendant le démarrage ne pesant plus sur la pompe haute pression 26, on pourra alors avantageusement utiliser pour celle-ci une pompe centrifuge plutôt qu'une pompe volumétrique à engrenages. Un clapet anti-retour 64 est monté sur la conduite 62 pour éviter qu'après démarrage, du carburant issu de la pompe haute pression 26 circule dans la conduite 62.

Dans ce qui précède, il a été envisagé un refroidissement du dispositif de démarrage par le carburant de façon indirecte, par l'intermédiaire d'huile agissant comme fluide caloporteur. On pourra bien entendu utiliser un autre fluide caloporteur, voire réaliser directement le refroidissement du dispositif de démarrage par le carburant en faisant circuler le carburant dans le dispositif de démarrage.

## Revendications

1. Moteur aéronautique comprenant un dispositif de pompage de carburant comportant une pompe haute pression (26) ayant une entrée reliée à une conduite (28) de carburant basse pression et une sortie reliée à un circuit principal d'alimentation en carburant haute pression, un dispositif électrique (40) de démarrage du moteur et un dispositif de refroidissement du dispositif électrique de démarrage relié au dispositif de pompage pour assurer le refroidissement par circulation de carburant,
**caractérisé en ce que** le dispositif de refroidissement (54, 56, 58) est alimenté en carburant par une pompe (50) entraînée par un moteur électrique (52) indépendamment de la pompe haute pression (26) et ayant une entrée reliée au dispositif de pompage, en amont de la pompe haute pression (26).

2. Moteur aéronautique selon la revendication 1, dans lequel le dispositif de pompage comprend une pompe basse pression (24) entraînée à partir d'un arbre du moteur et ayant une sortie reliée à l'entrée de la pompe haute pression (26),
**caractérisé en ce que** la pompe électrique (50) alimentant le dispositif de refroidissement a son entrée reliée au dispositif de pompage entre la sortie de la pompe basse pression (24) et l'entrée de la pompe haute pression (26).

3. Moteur aéronautique selon l'une quelconque des revendications 1 et 2, **caractérisé en ce que** la pompe électrique (50) alimentant le dispositif de refroidissement a une sortie reliée au circuit principal (30) d'alimentation en carburant haute pression.

4. Moteur aéronautique selon la revendication 3, **caractérisé en ce que** la pompe haute pression (26) est une pompe centrifuge.

5. Moteur aéronautique selon l'une quelconque des revendications 1 à 3, **caractérisé en ce que** le dispositif de refroidissement comprend un premier circuit (54, 56) de circulation de fluide caloporteur relié au dispositif électrique de démarrage, un deuxième circuit (60) de circulation de carburant relié à la pompe électrique (50) alimentant le dispositif de refroidissement et un échangeur de chaleur (58) traversé par le premier et le deuxième circuit.

6. Moteur aéronautique selon l'une quelconque des revendications 1 à 4, **caractérisé en ce que** le dispositif de refroidissement est agencé pour refroidir un démarreur électrique du dispositif électrique de démarrage (40) et un circuit électronique (48) de commande de puissance du démarreur électrique.

## Claims

1. An aeronautical engine comprising a fuel pumping device including a high pressure pump (26) having an inlet connected to a low pressure fuel conduit (28) and an outlet connected to a main circuit for feeding high pressure fuel, an electric device (40) for starting the engine and a cooling device of the electric starting device connected to the pumping device in order to ensure cooling by circulation of fuel,
**characterized in that** the cooling device (54, 56, 58) is supplied with fuel through a pump (50) driven by an electric motor (52) independently of the high pressure pump (26) and having an inlet connected to the pumping device, upstream from the high pressure pump (26).

2. An aeronautical engine according to claim 1, wherein the pumping device comprises a low pressure pump (24) driven from a shaft of the engine and having an outlet connected to the inlet of the high pressure pump (26),
**characterized in that** the electric pump (50) feeding the cooling device has its inlet connected to the pumping device between the outlet of the low pressure pump (24) and the inlet of the high pressure pump (26).

3. An aeronautical engine according to any of claims 1 and 2, **characterized in that** the electric pump (50) feeding the cooling device has an outlet connected to the main circuit (30) for feeding high pressure fuel.

4. An aeronautical engine according to claim 3, **characterized in that** the high pressure pump (26) is a centrifugal pump.

5. An aeronautical engine according to any of claims 1 to 3, **characterized in that** the cooling device comprises a first circuit (54, 56) for circulating a heat transfer fluid, connected to the electric starting device, a second circuit (60) for circulating fuel connected to the electric pump (50) feeding the cooling device and a heat exchanger (58) passed through by the first and the second circuit.

6. An aeronautical engine according to any of claims 1 to 4, **characterized in that** the cooling device is designed so as to cool an electric starter of the electric starting device (40) and an electronic circuit (48) for controlling the power of the electric starter.

## Patentansprüche

1. Luftfahrttriebwerk, umfassend eine Treibstoffpumpvorrichtung, die eine Hochdruckpumpe (26) umfaßt, welche einen mit einer Niederdrucktreibstoffleitung (28) verbundenen Einlaß und einen mit einem Hauptkreis zur Hochdrucktreibstoffversorgung verbundenen Auslaß aufweist, eine elektrische Einrichtung (40) zum Starten des Triebwerks sowie eine Vorrichtung zum Kühlen der elektrischen Startvorrichtung, die mit der Pumpvorrichtung verbunden ist, um die Kühlung durch Treibstoffzirkulation sicherzustellen,
**dadurch gekennzeichnet, daß** die Kühlvorrichtung (54, 56, 58) über eine Pumpe (50) mit Treibstoff versorgt wird, die über einen Elektromotor (52) unabhängig von der Hochdruckpumpe (26) angetrieben wird und die einen mit der Pumpvorrichtung vor der Hochdruckpumpe (26) verbundenen Einlaß aufweist.

2. Luftfahrttriebwerk nach Anspruch 1, wobei die Pumpvorrichtung eine Niederdruckpumpe (24) umfaßt, die mittels einer Welle des Triebwerks angetrieben wird und einen mit dem Einlaß der Hochdruckpumpe (26) verbundenen Auslaß aufweist,
**dadurch gekennzeichnet, daß** der Einlaß der Elektropumpe (50), welche die Kühlvorrichtung versorgt, zwischen dem Auslaß der Niederdruckpumpe (24) und dem Einlaß der Hochdruckpumpe (26) mit der Pumpvorrichtung verbunden ist.

3. Luftfahrttriebwerk nach einem der Ansprüche 1 und 2, **dadurch gekennzeichnet, daß** ein Auslaß der Elektropumpe (50), welche die Kühlvorrichtung versorgt, mit dem Hauptkreis (30) zur Hochdrucktreibstoffversorgung verbunden ist.

4. Luftfahrttriebwerk nach Anspruch 3, **dadurch gekennzeichnet, daß** die Hochdruckpumpe (26) eine Kreiselpumpe ist.

5. Luftfahrttriebwerk nach einem der Ansprüche 1 bis 3, **dadurch gekennzeichnet, daß** die Kühlvorrichtung einen ersten Kreis (54, 56) zur Zirkulation von Kühlmittel, der mit der elektrischen Startvorrichtung verbunden ist, einen zweiten Kreis (60) zur Treibstoffzirkulation, der mit der die Kühlvorrichtung versorgenden Elektropumpe (50) verbunden ist, sowie einen von dem ersten und dem zweiten Kreis durchquerten Wärmetauscher (58) umfaßt.

6. Luftfahrttriebwerk nach einem der Ansprüche 1 bis 4, **dadurch gekennzeichnet, daß** die Kühlvorrichtung dazu eingerichtet ist, einen elektrischen Anlasser der elektrischen Startvorrichtung (40) sowie einen elektronischen Kreis (48) zur Leistungssteuerung des elektrischen Anlassers zu kühlen.
